# EUROPÄISCHE PATENTANMELDUNG

(11) **EP 0 930 107 A1**
(43) Veröffentlichungstag der Anmeldung: **21.07.1999**
(21) Anmeldenummer: 99100159.5
(22) Anmeldetag: 07.01.1999
(51) Int. Cl.: B21B 1/08, B22D 11/126, B23D 45/10

(54) **Verfahren und Anlage zum Längsteilen von Brammen aus Metall**

(30) Priorität: 20.01.1998 DE 19801744
(71) Anmelder: Thyssen Krupp Stahl AG, 40211 Düsseldorf (DE)
(72) Erfinder: Rungger, Helmut, 4661 Roitham (AT); Daum, Matthias Dr., 44229 Dortmund (DE)

(57) **Zusammenfassung**

Um ein Verfahren zum Längsteilen von stranggegossenen Brammen aus Metall in zwei oder mehrere Einzelbrammen mittels Schneiden zu schaffen, mit dem ein Klemmen des Schnittwerkzeuges im Schnittspalt sicher vermieden werden kann bei erhöhter Wirtschaftlichkeit gegenüber dem bekannten Verfahren, werden die Brammen jeweils mittels zweier überlappender Trennschnitte von oben und von unten geteilt, wobei entweder der Trennschnitt von oben oder der Trennschnitt von unten gegenüber dem zweiten Schnitt vorauseilend oder nacheilend ausgeführt wird.

## Beschreibung

Die Erfindung betrifft ein Verfahren zum Längsteilen von Brammen aus Metall gemäß dem Oberbegriff des Anspruchs 1 sowie eine Anlage zur Durchführung des Verahrens gemäß dem Oberbegriff des Anspruchs 6.

Bei einem derartigen bekannten Verfahren zum Längsteilen von Brammen aus Metall mit der zugehörigen Anlage werden die Brammen über ihre Länge mittels einer einzigen Kaltkreissägemaschine mit einem der Dicke der Bramme entsprechend ausgelegten Durchmesser des Sägeblattes in einem Schnitt geteilt.

Dabei besteht aber die Gefahr, daß durch die Eigenspannungen im Brammenmaterial Veränderungen des Schnittspaltes während des Trennvorganges auftreten. Bei einem Schließen des Schnittspaltes kann es beim Sägen zu Störungen im Sägeablauf kommen, z.B. durch ein Klemmen des Sägeblattes im Schnittspalt.

Von daher liegt der Erfindung die Aufgabe zugrunde, ein Verfahren sowie eine Anlage der eingangs genannten Art zu schaffen, mit dem bzw. der ein Klemmen des Schnittwerkzeugs im Schnittspalt sicher vermieden werden kann bei erhöhter Wirtschaftlichkeit gegenüber dem bekannten Verfahren.

Nach der Erfindung wird die Aufgbabe durch die in den kennzeichenden Teilen der Ansprüche 1 und 6 angegebenen Merkmale gelöst.

Weitere zweckmäßige und vorteilhafte Ausbildungen der erfindungsgemäßen Verfahrensschritte sowie der erfindungsgemäßen Anlage sind in den Ansprüchen 2 bis 5 bzw. 7 bis 14 angegeben.

Durch das Schneiden der Bramme mittels zweier überlappender Trennschnitte, jeweils von unten und von oben, mit jeweils einem gegenüber dem anderen vorauseilend bzw. nacheilend längs der Bramme geführten Schnittwerkzeugträger, wobei jedes Schnittwerkzeug nur etwa die Hälfte der Bramme trennt, wird ein Schließen des Schnittspaltes vermieden. Um dieses noch zu unterstützen, können in zweckmäßiger Weise sowohl in den Schnittspalt von oben als auch in den von unten hinter dem jeweiligen Trennschnitt in regelmäßigen Abständen Keile eingeschoben werden. Außerdem erlaubt das zweigeteilte Teilen der Brammen mittels zweier Trennschnitte einen doppelten Vorschub der Schnittwerkzeugträger bei erhöhter Standzeit der Schnittwerkzeuge.

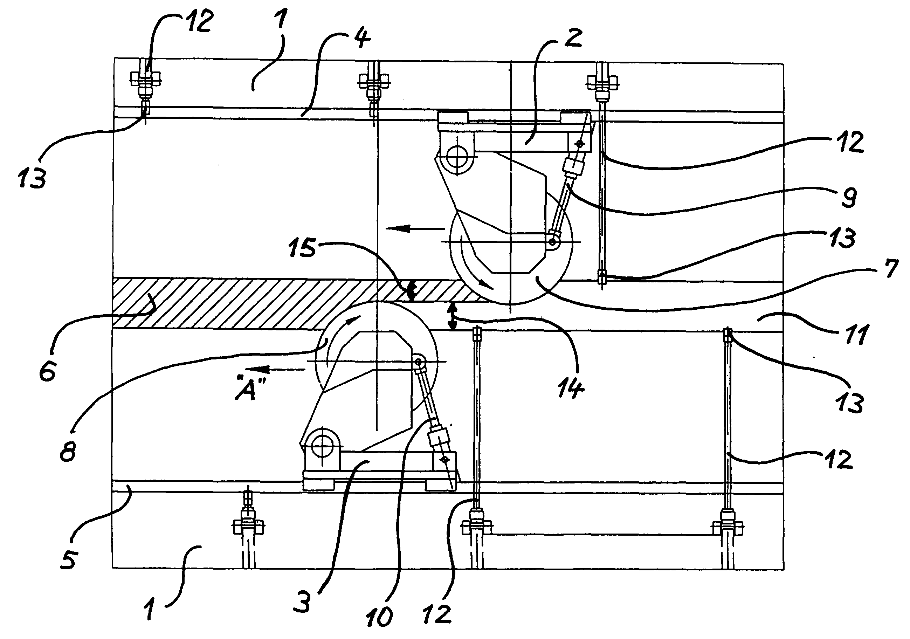

Anhand der Zeichnung wird die Erfindung nachfolgend näher erläutert.

In der Zeichnung ist ein Ausführungsbeispiel einer erfindungsgemäßen Anlage zum Längsteilen von Brammen aus Metall in einer Prinzipskizze in Teilseitenansicht dargestellt.

Wie die Skizze zeigt, sind in Maschinenständern 1 Schnittwerkzeugträger 2 und 3 auf Führungen 4 und 5 entlang einer auf einer nicht dargestellten Auflage aufgespannten Bramme 6 oberhalb und unterhalb dieser verfahrbar angeordnet.

Die Schnittwerkzeugträger 2 und 3 weisen Kreissägeblätter 7 und 8 auf, wobei in diesem Ausführungsbeispiel der Schnittwerkzeugträger 3 unterhalb der zu teilenden Bramme 6 gegenüber dem Schnittwerkzeugträger 2 oberhalb der Bramme 6 in Richtung 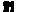 A" vorauseilend ist.

Die Kreissägeblätter 7 und 8 sind in den Schnittwerkzeugträgern 2 und 3 mittels Hydraulikzylindern 9 bzw. 10 gegen die Bramme 6 schwenkbar angeordnet. Außerdem sind im Maschinenständer 1 sowohl von unten als von oben in den Schnittspalt 11 mittels in regelmäßigen Abständen angeordneten Keileinschubvorrichtungen 12 einschiebbare Keile 13 vorgesehen.

Zum Teilen der Bramme 6 läuft der untere Schnittwerkzeugträger 3 mit dem Kreissägeblatt 8 vor und schneidet etwa die Hälfte 14. Ein Schließen dies Schnittspaltes ist nicht möglich, da der Bereich der Bramme 6 darüber noch nicht geteilt ist. Mit dem im oberen Schnittwerkzeugträger 2 angeordneten Kreissägeblatt 7 wird dann nacheilend die Restdicke 15 der Bramme 6 geteilt.

Um ein Schließen des ganzen Schnittspaltes 11 unterstützend sicher zu vermeiden, werden von unten in die erste Häfte 14 des Schnittspaltes direkt jeweils nach dem unteren Kreissägeblatt 8 in regelmäßigen Abständen Keile 13 mittels der Keileinschubvorrichtungen 12 eingeschoben, bevor das Kreissägeblatt 7, das die Restdicke 15 der Bramme 6 von oben teilt, den Schnittspalt des unteren Kreissägelbattes 8 jeweils erreicht.

Auch ist es möglich, in den Schnittspalt des oberen Kreissägeblattes 7 Keile 13 in regelmäßigen Abständen mittels der Keileinschubvorrichtungen 12 einzuschieben, so daß ein Klemmen der Kreissägeblätter 7 und 8 im Schnittspalt vollkommen ausgeschlossen ist.

### Bezugszeichenliste

- 1: Maschinenständer
- 2: Schnittwerkzeugträger
- 3: Schnittwerkzeugträger
- 4: Führungen
- 5: Führungen
- 6: Bramme
- 7: Kreissägeblatt
- 8: Kreissägeblatt
- 9: Hydraulikzylinder
- 10: Hydraulikzylinder
- 11: Schnittspalt
- 12: Keileinschubvorrichtung
- 13: Keil
- 14: Hälfte
- 15: Restdicke

## Patentansprüche

1. Verfahren zum Längsteilen von stranggegossenen Brammen aus Metall in zwei oder mehrere Einzelbrammen mittels Schneiden, **dadurch gekennzeichnet**, daß die Brammen jeweils mittels zweier überlappender Trennschnitte von oben und von unten geteilt werden, wobei entweder der Trennschnitt von oben oder der Trennschnitt von unten gegenüber dem zweiten Schnitt vorauseilend oder nacheilend ausgeführt wird.

2. Verfahren nach Anspruch 1, **dadurch gekennzeichnet**, daß die Trennschnitte von oben und von unten jeweils durch Kreissägen mit horizontaler Schnittrichtung hergestellt werden.

3. Verfahren nach Anspruch 1, **dadurch gekennzeichnet**, daß die Trennschnitte von oben und von unten jeweils durch Kreisfräsen mit horinzontaler Schnittrichtung hergestellt werden.

4. Verfahren nach einem der Ansprüche 1 bis 3, **dadurch gekennzeichnet**, daß nach dem Schneiden des vorauseilenden Trennschnittes in diesen in regelmäßigen Abständen Keile eingeschoben werden, bevor jeweils der nacheilende Trennschnitt diese Keileinschiebpunkte des vorauseilenden Trennschnittes erreicht.

5. Verfahren nach einem der Ansprüche 1 bis 4, **dadurch gekennzeichnet**, daß auch in den nacheilenden Trennschnitt in regelmäßigen Abschnitten Keile eingeschoben werden.

6. Anlage zum Längsteilen von stranggegossenen Brammen aus Metall in zwei oder mehrere Einzelbrammen unter Verwendung von jeweils entlang einer in Maschinenständern gelagerten Auflage mit Spanneinrichtung für die Bramme bewegbaren Schnittwerkzeugträgern, **dadurch gekennzeichnet**, daß die Anlage oberhalb und unterhalb der Auflage für die Bramme (6) je einen entlang dieser auf Führungen (4, 5) verfahrbaren Schnittwerkzeugträger (2, 3) aufweist, wobei die Schnittwerkzeugträger (2, 3) in Längsrichtung der Anlage versetzt zueinander angeordnet sind.

7. Anlage nach Anspruch 6, **dadurch gekennzeichnet**, daß die Spanneinrichtung für die Bramme (6) einseitig der Auflage angeordnet und quer zu dieser verfahrbar ist.

8. Anlage nach den Ansprüchen 6 und 7, **dadurch gekennzeichnet**, daß die Schnittwerkzeuge jeweils aus Kreissägeblättern (7, 8) bestehen.

9. Anlage nach den Ansprüchen 6 und 7, **dadurch gekennzeichnet**, daß die Schnittwerkzeuge jeweils aus Kreisfräsmessern bestehen.

10. Anlage nach einem oder mehreren der Ansprüche 6 bis 9, **dadurch gekennzeichnet**, daß die Schnittwerkzeuge in den Schnittwerkzeugträgern (2, 3) mittels Hydraulik-oder Pneumatikzylindern (9, 10) gegen die Bramme (6) von unten bzw. oben schwenkbar angeordnet sind.

11. Anlage nach einem oder mehreren der Ansprüche 6 bis 9, **dadurch gekennzeichnet**, daß die Schnittwerkzeuge in den Schnittwerkzeugträgern (2, 3) jeweils vertikal entlang einer Linearführung gegen die Unter- bzw. Oberseite der Bramme (6) anstellbar ausgeführt sind.

12. Anlage nach einem oder mehreren der Ansprüche 6 bis 11, **dadurch gekennzeichnet**, daß die Schnittwerkzeugträger (2, 3) miteinander gekoppelt sind.

13. Anlage nach einem oder mehreren der Ansprüche 6 bis 11, **dadurch gekennzeichnet,** daß die Schnittwerkzeugträger (2, 3) unabhängig voneinander entlang der Auflage für die Bramme (6) verfahrbar angeordnet sind.

14. Anlage nach einem oder mehreren der Ansprüche 6 bis 13, **dadurch gekennzeichnet**, daß entlang der Auflage unterhalb und oberhalb dieser in Schnittspaltrichtung in Abständen Keileinschubvorrichtungen (12) im Maschinenständer (1) vorgesehen sind.
